# EUROPÄISCHE PATENTANMELDUNG

(11) **EP 0 545 015 A1**
(43) Veröffentlichungstag der Anmeldung: **09.06.1993**
(21) Anmeldenummer: 92116452.1
(22) Anmeldetag: 25.09.1992
(51) Int. Cl.: H01M 2/36, H01M 2/38, H01M 2/20, H01M 10/42, H01R 13/00

(54) **Batterie-Anschlussvorrichtung**

(30) Priorität: 30.11.1991 DE 9114909 U
(71) Anmelder: VARTA Batterie Aktiengesellschaft, D-30405 Hannover (DE)
(72) Erfinder: Schmidt, Hartmut, W-5820 Gevelsberg (DE); Falk, Klaus-Martin, W-5800 Hagen (DE)
(74) Vertreter: Kaiser, Dieter Ralf, Dipl.-Ing.

(57) **Zusammenfassung**

Zum gleichzeitigen Anschließen einer Akkumulatorenbatterie an verschiedene Versorgungseinrichtungen (Ladegerät, Druckgasquelle für Elektrolytumwälzpumpe) ist das Steckerteil (17) einer elektrischen Kupplung neben dem Steckanschluß (1) einer Luftleitung auch mit einem Steckanschluß (20) für eine Wasserzuführung mechanisch verbunden. Mit dem Verbundstecker korrespondiert ein entsprechendes Dosenteil. In beiden Fällen macht eine Grundplatte (6) die Adaptierung der Stecker- und Dosenteile einer kombinierten Luft-/Wasserkupplung an die entsprechenden koppelbaren Teile einer elektrischen Normsteckvorrichtung möglich. Sämtliche Anschlüsse lassen sich aber auch in ein gemeinsames Gehäuse für das Steckerteil bzw. Dosenteil integrieren.

## Beschreibung

Die Erfindung betrifft eine Vorrichtung zum Anschließen einer Akkumulatorenbatterie mit Elektrolytumwälzung, insbesondere Traktionsbatterie, an eine Stromversorgungs- und eine Druckgasquelle, die eine elektrische und eine pneumatische Kupplung umfaßt, von welchen jeweils die Steckerteile und die Dosenteile mechanisch miteinander verbunden und die Verbundteile unter gleichzeitiger Herstellung der elektrischen und der pneumatischen Verbindung koppelbar sind.

Traktionsbatterien etwa in Gabelstablern, die im Schichtbetrieb arbeiten, unterliegen besonders starken zyklischen Belastungen, weil ihre eigentlichen Arbeitsphasen bei hoher Stromabgabe im allgemeinen kurz sind und sie nach ebenfalls möglichst kurzen Ladezeiten wieder einsatzbereit sein müssen.

Zur Wiederherstellung der vollen Betriebsbereitschaft auf der Ladestation gehören neben der Wiedererlangung des Volladezustandes auch Kontroll- und Wartungsarbeiten wie Elektrolytstandsmessung, Elektrolytergänzung etc.

Um der bei Bleiakkumulatoren unerwünschten Säureschichtung entgegenzuwirken, sind moderne Traktionszellen u.a. auch mit luftbetriebenen Elektrolytumwälzpumpen - im einfachsten Fall Lufteinblasrohren- versehen, so daß zumindest während der Wartungspause, zwecksmäßig während der Ladebehandlung, durch Einleiten eines Gasstromes in den Elektrolyten ein Dichteausgleich herbeigeführt werden kann.

Diese Maßnahme setzt die Verfügbarkeit einer Druckgasquelle, z.B. eines Kompressors, in unmittelbarer Nähe des Ladegerätes voraus.

Im deutschen Gebrauchsmuster 90 03 174 ist eine Vorrichtung zum Anschließen einer Akkumulatorenbatterie an eine Stromversorgungs- und eine Druckgasquelle beschrieben, die es erlaubt, den Ladeprozeß und die Gaszufuhr unmittelbar miteinander zu verknüpfen. Die Vorrichtung stellt eine Kupplung dar, die zusammengesetzt ist aus einem Steckerteil, in welches ein z.B. vom Ladegerät kommendes Stromkabel und eine von einer Druckgasquelle kommende Gasleitung münden, und einem Dosenteil, in welches ein von der Batterie ausgehendes Stromkabel und ein zur Batterie führender Gasleitungsanschluß münden. Durch Zusammenstecken von Steckerteil und Dosenteil, den Kupplungselementen, werden sowohl die elektrischen als auch die pneumatischen Anschlußleitungen unter gegenseitiger Abdichtung der Rohranschlüsse für den Gaskanal vereinigt.

Ausgehend von dieser Möglichkeit, die Strom- und Luftversorgung der Batterie durch Zusammenschluß der entsprechenden Versorgungsleitungen mittels einer einzigen, gemeinsamen Steckverbindung miteinander zu verkoppeln, stellte sich erfindungsgemäß die Aufgabe, weitere Maßnahmen der Batterieversorgung, die eigene Einrichtungen erfordern und daher im allgemeinen vom Ladevorgang getrennt durchgeführt werden, mit dem Laden und mit der pneumatischen Elektrolytumwälzung durch einen einzigen verbindenden Schritt zu bündeln.

Die Aufgabe wird gemäß der Erfindung durch eine Vorrichtung gelöst, wie sie im Anspruch 1 definiert ist.

Dank der Erfindung wird in jeder Wartungsphase neben einer Volladung und neben einer ausgeglichenen Säurekonzentration in der Zelle automatisch durch Einspeisung von Wasser aus einem externen Vorratsbehälter auch ein korrekter Elektrolytfüllstand sichergestellt. Dabei hat es sich auch hier als vorteilhaft erwiesen, alle infrage kommenden Versorgungsleitungen, nämlich das Stromzuleitungskabel, die Luftleitung und die wasserführende Leitung, mit koppelbaren Steckverbindungen zu versehen, wobei alle Steckerteile mechanisch so miteinander verbunden sind, daß sie exakt mit entsprechenden Dosenteilen der batterieseitigen Anschlüsse, die ebenfalls mechanisch unter sich verbunden sind, korrespondieren. Durch einfaches Zusammenstecken von Stecker-Verbundteil und Dosen-Verbundteil werden alle Leitungen gleichzeitig in einer Kupplung vereinigt. Die bislang unabhängig von den übrigen Wartungsarbeiten vorgenommene Wassernachfüllung, die zeitaufwendig ist, entfällt.

Zur mechanischen Verbindung eines wasserführenden mit einem elektrischen Kupplungsteil genügt oft eine einfache Verschraubung. Um jedoch eine funktionsgerechte exakte Anpassung der Kupplungsteile sicherzustellen, können an marktüblichen elektrischen Steckvorrichtungen Hilfskontakte wie z.B. Stifte an den Steckergehäusen angebracht sein, die in korrespondierende Bohrungen an den Elementen der Wasserkupplung eingreifen. Dabei liegt es im Rahmen der Erfindung, eine genügende Anzahl von Bohrungen mit einer geeigneten geometrischen Verteilung an den Luftkupplungselementen vorzusehen, damit die Möglichkeit einer Adaptierung sich auch auf etwa vorhandene Varianten bzw. verschiedene Fabrikate seitens der elektrischen Kupplung erstrecken kann.

In einer besonders günstigen Ausführungsform, die die Adaptierfähigkeit auch auf elektrische Normsteckvorrichtungen ausdehnt, ist die Anschlußvorrichtung gemäß der Erfindung so gestaltet, daß die steckbaren Anschlüsse der Wasserleitung mit den steckbaren Anschlüssen einer bereits vorhandenen Luftzuleitung zusammengelegt sind, so daß die "nichtelektrischen" Versorgungsleitungen über eine gesonderte Kupplung führen. Das Steckerteil und das Dosenteil der kombinierten Luft-/Wasserkupplung wird darauf mit dem Steckerteil bzw. mit dem Dosenteil der elektrischen Kupplung unter Zwischenlage einer Grund- oder Adapterplatte als Montagehilfe verbunden.

Diese bevorzugte Ausführungsform der neuen Anschlußvorrichtung wird anhand einiger Figuren erläutert.

Figur 1 zeigt eine kombinierte Luft-/Wasserkupplung im entkoppelten Zustand und in ihre Bestandteile zerlegt.

Figur 2 zeigt Grundplatten zum Adaptieren eines Stecker- oder Dosenteils der Luft-/Wasserkupplung an ein entsprechendes Teil einer elektrischen Kupplung.

Figur 3 zeigt das Dosenteil einer elektrischen Normkupplung gemäß DIN 43 589.

Figur 4 zeigt eine zum gleichzeitigen Anschließen der Batterie an eine Wassernachfülleitung, eine Luftversorgungsleitung und an ein elektrisches Ladekabel eingerichtete Kupplung gemäß der Erfindung.

Figur 5 zeigt das Steckerteil der Kupplung von Figur 4, teils in Frontalansicht, teils im Querschnitt.

Figur 6 zeigt in ein gemeinsames Steckergehäuse integrierte Wasser-, Luft- und elektrische Kabelanschlüsse im Querschnitt.

Figur 7 zeigt eine Variante des Steckergehäuses von Figur 6 im Querschnitt.

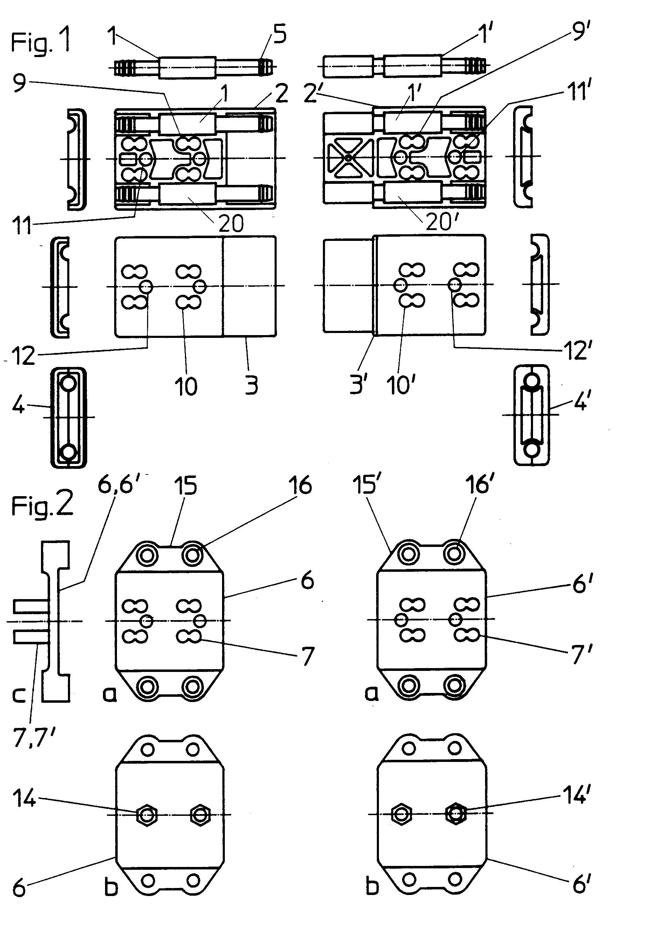

In Figur 1 ist zunächst die kombinierte Luft-/Wasserkupplung in entkoppeltem Zustand und in ihre Einzelbestandteile zerlegt dargestellt. Dabei bilden die mit einfachen Bezugsziffern bezeichneten Teile auf der linken Seite der Figur, nämlich das Anschlußelement 1 für die Luftversorgung und das Anschlußelement 20 für die Wasserversorgung, eine die Anschlußelemente aufnehmende Unterschale 2 und ein Deckel 3 (Draufsicht) zusammen das Steckerteil 4 dieser Kupplung (Seitenansicht). In entsprechender Weise setzt sich aus Anschlußelement 1', Anschlußelement 20', einer Unterschale 2' und einem Deckel 3' das zugehörige Dosenteil 4' zusammen. (Die Zuordnung einfacher Bezugszeichen jeweils zur Steckerteil-Seite der Batteriesteckvorrichtung und die Zuordnung gestrichener Bezugzeichen zur Dosenteil-Seite gilt auch für alle übrigen Figuren).

Beim Zusammenstecken der Kupplungselemente 4 und 4' vereinigen sich die Anschlußelemente 20 und 20' unter gegenseitiger Abdichtung mittels an den Anschlußelementen 1 und 20 angebrachter O-Ringe 5 zu durchgehenden Luft- bzw. Wasserleitungen.

Die damit an sich fertige Kupplung für den vereinigten Luft-/Wasseranschluß bedarf jedoch noch einer "Bündelung" mit einer elektrischen Kupplung in der Weise, daß mit dem Zusammenschließen der Kupplungselemente für Gas und Wasser zugleich die elektrische Verbindung zwischen Batterie und Ladegerät hergestellt ist.

Den Zusammenschluß ermöglichen in diesem Fall zwei im wesentlichen identische Grund- oder Adapterplatten nach Figur 2, von denen die Grundplatte 6 die Adaptierung des Steckerteils 4 der Luft-/Wasserkupplung an das Steckerteil einer elektrischen Kupplung und die Grundplatte 6' die Adaptierung des Dosenteils 4' der Luft-/Wasserkupplung an das Dosenteil der elektrischen Kupplung übernimmt.

Beide Grundplatten sind jeweils durch ihre Oberseite (a), ihre Unterseite (b) sowie durch eine Seitenansicht (c) dargestellt.

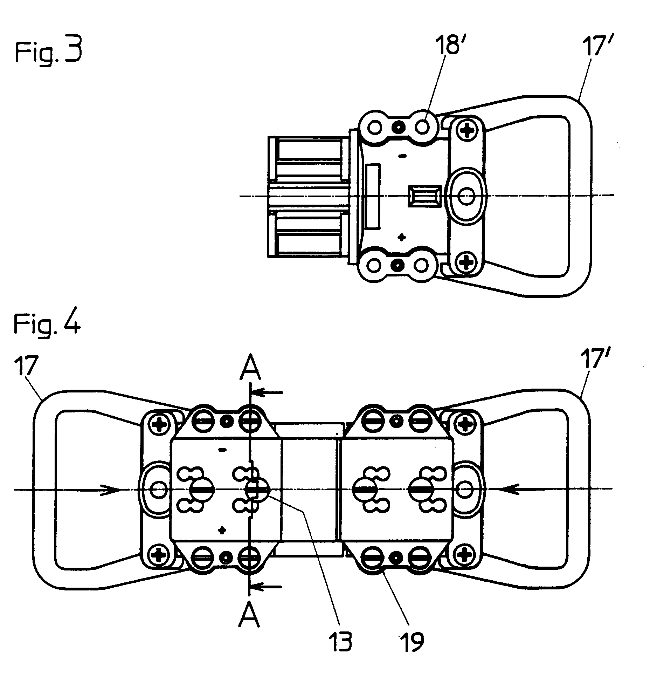

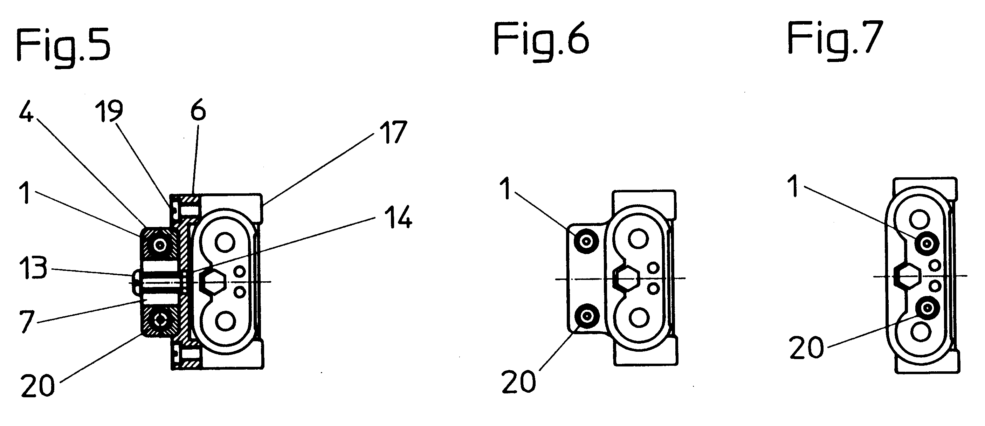

Auf die Oberseite der Adapterplatte 6 wird nunmehr das Steckerteil 4 der kombinierten Kupplung und auf die Oberseite der Adapterplatte 6' das Dosenteil der kombinierten Kupplung aufgeschraubt. Dabei greifen Führungsstifte 7, die sich auf der Oberseite der Adapterplatte 6 befinden, in korrespondierende Bohrungen 9, 10 an den Halbschalen des Steckerteils ein. Weitere Bohrungen 11, 12 in den Halbschalen nehmen Befestigungsschrauben 13 (siehe Figur 4 und 5) auf, die mit ihren Enden von den Sechskantmuttern 14 an der Unterseite der Adapterplatte 6 gefaßt werden. Die Befestigung des Dosenteils 4' auf der Oberseite von Adapterplatte 6' durch Aufstecken und Verschrauben erfolgt ganz analog.

Zur Befestigung des Steckerteils und des Dosenteils einer elektrischen Kupplung an der Unterseite der Adapterplatte 6 bzw. 6' besitzen diese an ihrer Peripherie einander gegenüberliegende Flansche 15 mit Bohrungen 16.

Die Geometrie dieser Flansche bzw. Bohrungen ist nun derart, daß sie mit entsprechenden Bohrungen an den Kupplungsteilen einer elektrischen Normsteckvorrichtung koinzidieren, wenn letztere auf die Unterseite der jeweils entsprechenden Adapterplatte paßgerecht aufgebracht werden. Die Bohrkanäle dienen der Aufnahme von Schrauben und machen damit eine von den Luft-/Wasserkupplungselementen unabhängige Befestigung der elektrischen Normsteckerteile an den Adapterplatten möglich.

Figur 3 gibt das Dosenteil 17' einer elektrischen Normsteckvorrichtung gemäß DIN 43589 in einer Draufsicht wieder. Die dort vorhandenen Bohrungen 18' fallen mit den Bohrungen 16' einer paßgerecht angelegten Adapterplatte 6' zusammen, so daß mittels Schrauben 19, (Fig. 4 und 5) ein fester Verbund hergestellt werden kann. In Figur 4 ist das elektrische Dosenteil 17' der Figur 3 nach Aufmontieren der Adapterplatte 6' und des Dosenteils 4' der Luft-/Wasserkupplung mit einem entsprechend komplettierten elektrischen Normsteckerteil 17 zusammengekoppelt.

Figur 5 macht die Struktur der neuen Batteriekupplung noch einmal an dem kompletten Steckerteil, bestehend aus elektrischem Normstecker 17, dem "nichtelektrischen" Steckerteil 4 mit inliegendem Luftanschlußelement 1 und inliegendem Wasseranschlußelement 20 sowie der Adapterplatte 6 deutlich.

Um die Funktion der Befestigungselemente (Führungsstifte 7, Schrauben 13, 14, 19) mit den von diesen ausgefüllten Bohrungen klarer erkennbar zu machen, sind das Steckerteil für Luft-/Wasser und die Adapterplatte durch eine Querschnittsdarstellung wiedergegeben, wobei die Querschnittsebene mit der mehrfach gebrochenen Spur A-A in Figur 4 wechselt. Der elektrische Stecker 17 erscheint dagegen in einer Frontalansicht, aus der Richtung der Pfeile gesehen.

In einer weiteren, sehr vorteilhaften Ausführungsform der Erfindung sind die Kupplungselemente für alle drei Versorgungsanschlüsse (Luft, Wasser,Strom) jeweils in ein gemeinsames Steckergehäuse und in ein gemeinsames Gehäuse für das korrespondierende Dosenteil integriert. Die Mehrfach-Steckverbindung wird dadurch besonders einfach, da der Zusammenschluß der verschiedenen Kupplungsteile mittels Adapter entfällt. Einheitliche Stecker mit integrierten Anschlüssen sind außerdem durch die Kompaktheit und Geschlossenheit ihres Gehäuses vor Verschmutzungen besser geschützt. In dem gemeinsamen Gehäuse gemäß Fig. 6 sind der Luftanschluß 1 und der Wasseranschluß 20 außerhalb eines elektrischen Normanschlusses, ähnlich wie in Fig. 5, positioniert. Nach Fig. 7 ergibt sich durch Einbeziehung der "nichtelektrischen" Leitungen in den elektrischen Anschlußbereich eine flache Gehäuseform.

In einer weiteren vorteilhaften Ausgestaltung der neuen Batterie-Anschlußvorrichtung ist eine mechanische Verriegelung vorgesehen, welche den Gasweg und/oder Wasserweg, insbesondere jedoch aus Sicherheitsgründen den Wasserweg, erst dann freigibt, wenn der elektrische Kontakt hergestellt ist. Diesem Zweck können beispielsweise Führungsstifte dienen, die beim Zusammenstecken der Kupplungsteile bei einer bestimmten Eindringtiefe die elektrische Kontaktgabe sicherstellen und daraufhin im Wasserweg einen Schieber öffnen. Dadurch wird eine Kontaminierung des gegebenenfalls noch nicht ganz geschlossenen Strompfades durch vorzeitig austretendes Wasser mit Kurzschlußfolgen wirksam verhindert. Den Führungsstiften fällt insoweit die Rolle von Hilfs- oder Pilotkontakten für die Stromfreigabe und damit als Auslöser für die Freigabe des Luftweges zu.

Es ist auch möglich, den Lufteinlaß zur Batterie vom Ladegerät aus zu steuern, indem auf einsetzenden Stromfluß hin ein Magnetkontakt, z.B. ein Reedkontakt, in der Kupplung anspricht und dieser wiederum auf ein im Luftweg befindliches Magnetventil einwirkt.

Durch die Erfindung wird an Ladestationen für Elektrofahrzeuge eine größere Flexibilität bei der Handhabung der Traktionsbatterien durch das Bedienungspersonal erreicht, weil die Stromversorgung einerseits und die Nachfüllung mit Wasser anderseits, die vorteilhafterweise gekoppelt ist mit einer Luftzufuhr für den Betrieb von Elektrolytumwälzpumpen, nicht über getrennte Brücken erfolgen müssen.

Darüber hinaus besitzt der Gegenstand der Erfindung den Vorteil, daß die Adaptierung von Kupplungselementen für "nichtelektrische" Versorgungsleitungen (Luft, bzw. Gas, Wasser) nicht nur mit einer bestimmten marktgängigen Art von elektrischen Batteriesteckern, sondern gegebenenfalls auch mit Varianten derselben sowie mit Normsteckern vorgenommen werden kann.

## Patentansprüche

1. Vorrichtung zum Anschließen einer Akkumulatorenbatterie mit Elektrolytumwälzung, insbesondere Traktionsbatterie, an eine Stromversorgungs- und eine Druckgasquelle, die eine elektrische Kupplung und eine pneumatische Kupplung umfaßt, von welchen jeweils die Steckerteile und die Dosenteile mechanisch miteinander verbunden und die Verbundteile unter gleichzeitiger Herstellung der elektrischen und der pneumatischen Verbindung koppelbar sind, dadurch gekennzeichnet, daß an den koppelbaren Verbundteilen (4,4') zusätzlich steckbare Anschlußelemente (20,20') für eine Wasserversorgung vorgesehen sind.

2. Vorrichtung nach Anspruch 1, dadurch gekennzeichnet, daß die Anschlußelemente (1,1') für die Luftversorgung und für die Wasserversorgung (20,20') in einer gesonderten Kupplung zusammengefaßt sind und daß zum Verbinden von deren Steckerteilen (4) einerseits und deren Dosenteilen (4') andererseits mit den entsprechenden Teilen einer elektrischen Kupplung Grund- und Adapterplatten (6,6') vorgesehen sind, auf deren eine Seite jeweils das Steckerteil bzw. Dosenteil der kombinierten Luft-/Wasserkupplung und auf deren andere Seite jeweils das Stecker- bzw. Dosenteil der elektrischen Kupplung aufmontiert ist.

3. Vorrichtung nach Anspruch 2, dadurch gekennzeichnet, daß die Adapterplatten zur Montage und Positionierung des Steckerteils bzw. Dosenteils der kombinierten Luft-/Wasserkupplung auf ihrer einen Seite Führungsstifte (7,7') besitzen, mit den Bohrungen (9,10,9',10') an den Teilen der kombinierten Luft-/Wasserkupplung korrespondieren und auf welche diese Teile aufsteckbar sind, und daß zur Adaptierung an das Steckerteil bzw. Dosenteil der elektrischen Kupplung an den Adapterplatten periphere Flansche (15,15') vorhanden sind, die Bohrungen (16,16') besitzen, welche mit Bohrungen eines auf die andere Seite der Adapterplatten jeweils aufgebrachten elektrischen Kupplungsteiles koinzidieren und durch welche Befestigungsschrauben (19) hindurchführbar sind.

4. Vorrichtung nach Anspruch 2 oder 3, dadurch gekennzeichnet, daß die Teile der kombinierten Luft-/Wasserkupplung mit der jeweiligen Adapterplatte zusätzlich verschraubt sind.

5. Vorrichtung nach einem der Ansprüche 2 bis 4, dadurch gekennzeichnet, daß das Steckerteil und das Dosenteil der elektrischen Kupplung genormte Teile einer elektrischen Steckvorrichtung sind.

6. Vorrichtung nach Anspruch 1, dadurch gekennzeichnet, daß die gleichzeitig koppelbaren Anschlußelemente für Strom, Luft und Wasser in ein gemeinsames Steckerteil-Gehäuse und ein dazu korrespondierendes gemeinsames Dosenteil-Gehäuse integriert sind.

7. Vorrichtung nach einem der Ansprüche 1 bis 6, dadurch gekennzeichnet, daß die Kupplung für den Wasseranschluß eine Durchflußsperre besitzt, die erst über die hergestellte elektrische Verbindung öffnet.

8. Vorrichtung nach Anspruch 7, dadurch gekennzeichnet, daß die Aufhebung der Durchflußsperre durch einen Hilfskontakt für die Stromschließung auslösbar ist.

9. Vorrichtung nach Anspruch 8, dadurch gekennzeichnet, daß die Durchflußsperre ein Magnetventil ist.
